# EUROPEAN PATENT APPLICATION

(11) **EP 1 868 319 A1**
(43) Date of publication of application: **19.12.2007**
(21) Application number: 06290959.3
(22) Date of filing: 12.06.2006
(51) Int. Cl.: H04L 12/24

(54) **Method, system and computer program for implementing a network management protocol**

(71) Applicant: Alcatel Lucent, 75008 Paris (FR)
(72) Inventor: Paparella, Andrea, 21052 Busto Arsizio (Varese) (IT); Donadio, Pasquale, 80129 Napoli (IT); Riglietti, Roberto, 20059 Vimercate (Milano) (IT)
(74) Representative: Menzietti, Domenico

(57) **Abstract**

A method is described for using a network management protocol in a remote Managed Device management session performed on Managed Objects arranged in at least one Management Information Base. The method includes the steps of:
- providing a Reliability Manager block (404a, 404b, 404c) configured to manage a Transaction (T) by providing a set of transactional commands (B (T), C(T), A(T)) on the Managed Objects;
- including in the Reliability Manager block (404a, 404b, 404c) a file which contains in temporal order, the list of actions realized by said Transaction; and
- associating to the transactional commands (B(T), C(T), A(T)) a complete set of "inverse" operations, which permits to re-build a consistent state of said Managed objects after a failure.

## Description

### Field of the invention

The invention relates to techniques for implementing network management protocols. The invention can be applied i.a. in treating a transactional process in order to ensure the consistent state of the Managed Objects in a Management Information Base (MIB). The present invention was developed specifically to a Simple Network Management Protocol (SNMP)-managed network.

### Background of the invention

The Simple Network Management Protocol (SNMP) is a protocol that enables network administrators to manage network performance, find and solve network problems, and plan network expansion.

A SNMP-managed network comprises at least three key components: one or more Managed Devices, one or more Agents, and one or more Network Management Station(NMS).

A Managed Device is a network node that contains a Simple Network Management Protocol Agent and resides in a managed network. The Managed Devices collect and store management information and make this information available to the Network Management Station using the SNMP protocol. The Managed Devices, sometimes called Network Elements, can be routers and access servers, switches and bridges, hubs, computer hosts, or printers.

An Agent is a network-management software module that resides in a Managed Device. An Agent has local knowledge of management information and is configured to translate the management information into a form that is compatible with the SNMP protocol.

A Network Management Station executes software applications running on hardware (for example, a processor), in order to control the Managed Devices. The Network Management Station provides the bulk of the processing and memory resources required for the management of the network. At least one Network Management Station exists on amanaged network.

A Management Information Base (MIB) is a collection of hierarchically organized information. The Management Information Bases are accessed by using a network management protocol, such as the SNMP protocol. The Management Information Bases are comprised of Managed Objects and are identified by Object Identifiers.

A Managed Object (sometimes also called a MIB object, an object, or a MIB/MO) is one of any number of specific characteristics of a Managed Device or "Network Element". The Managed Objects are comprised of one or more object instances, which are essentially variables.

An Object Identifier (or object ID) uniquely identifies a Managed Object in the Management Information Base hierarchy. The MIB hierarchy can be depicted as a tree with a nameless root, the levels of which are assigned by different organizations.

The top-level MIB object Identifiers belong to different standards organizations, while the lower-level object Identifiers are allocated by associated organizations.

The Network Management Station manages the devices and provide a summary of the information learned, or reports locally stored management information.

Unfortunately, the most popular management protocols, such as those referred to in the foregoing, namely the Simple Network Management Protocol (SNMP), the Transaction Language 1 (TL1) and the Common Management Information Protocol (CMIP), do not introduce any primitives for transaction management of data objects.

In particular, the most popular Management protocols do not implement any kind of transactional primitives on the Managed Objects.

The recovering of MIB objects after failures such as machine crashes or network failures, in network using the SNMP protocol, is an inherently complex problem: the states of objects in use before the failure may be corrupted, and the references to objects held by remote clients may be invalid.

This produces a "butterfly effect" which essentially leads to loss of traffic data and a consequent degradation of the Quality of Service of the whole network. The "butterfly effect" is a small configuration error that causes a big error, such as the loss of traffic data in the network.

Consistent with the current wording adopted in this technical domain (see e.g. in the document by Sanjay Mahapatra: "Transaction management under J2EE 1.2" - Java World July 2000), "transaction" is used herein to designate an indivisible unit of work comprised of several operations, all or none of which must be performed in order to preserve the data integrity.

The "Atomicity" property implies indivisibility, and any indivisible operation is said to be atomic.

A transaction must transition persistent data from one consistent state to another. If a failure occurs during processing, the data must be restored to the state prior to the transaction in order to ensure the "Consistency" property.

The transactions should not affect each other. A transaction in progress, not yet "committed" or "rolled back", must be isolated from other transactions, thus complying with the "Isolation" property.

Although several transactions may run concurrently, it should appear to each that all the others completed before or after it; all such concurrent transactions must effectively end in sequential order. Once a transaction has successfully committed, state changes committed by that transaction must be durable and persistent, despite any failures that occurs afterwards, ensuring the "Durability" property.

### Summary of the invention

The foregoing description of the prior art shows the need of defining solutions capable of treating a transactional process for Managed Devices in order to ensure the consistent state of the Managed Objects after a failure.

The object of the invention is thus to provide a fully satisfactory response to this need.

According to the present invention, that object is achieved by means of a method having the features set forth in the claims that follow. The invention also relates to a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is thus a method of using a network management protocol in a remote Managed Device management session performed on Managed Objects arranged in at least one Management Information Base. The method includes the step of:
- providing a Reliability Manager block configured to manage a Transaction by providing a set of transactional commands on said Managed Objects,
- including in the Reliability Manager block a file which contains in temporal order, the list of actions realized by said Transaction; and
- associating to said transactional commands a complete set of "inverse" operations, which permits to re-build a consistent state of said Managed Objects after a failure.

The solution described herein is based on the definition of a Management Information Base (MIB) and Managed Objects (MO) transactional service for Managed Device configuration, able to ensure a consistent state of the data objects in each management scenario.

The arrangement described herein defines a transactional process on Managed Objects which satisfies the Atomicity, Consistency, Isolation, and Durability properties, i.e. the "ACID" properties, on a Managed Device data repository in order to ensure the consistent state of the Managed Objects.

A Distributed MIB Coherency Supervisor block (DMCS) represents a distributed service which permits the sharing of a minimum set of MIB/MO transactional primitives act to implement the Atomicity, Consistency, Isolation, and Durability (ACID) properties on Management Database (e.g. SNMP MIB, Q3 M-Objects) during a remote Managed Devices management session.

The mechanism can be used in each Network Management context where the synchronization between the Agent and the Manager is important.

The solution described herein is based on a distributed service (e.g. a Web service) which can be called "on demand" when a current transaction requires a high "Quality of Transaction".

A Distributed MIB Coherency Supervisor arrangement is the solution proposed to increase the reliability of a managed network, without increasing the network complexity. In case of network management based on SNMP, it is possible to increase the reliability of the network introducing a transactional model that permits to undo and redo actions on Managed Objects of a MIB base, ensuring the consistency of the Managed Objects in each context.

### Brief description of the drawings

The invention will now be described, by way of example only, with reference to the enclosed figures of drawing, wherein:
- Figure 1 shows an exemplary architecture of a managed network including a Distributed MIB Coherency Supervisor arrangement, according to the present invention;
- Figure 2 shows an example of protocol used to implement the Distributed MIB Coherency Supervisor Logic.

### Best mode for carrying out the invention

The solution described herein was devised in particular for the SNMP and the Q3 management scenarios, but it can be easily extended at each management context (e.g. the TL1 context).

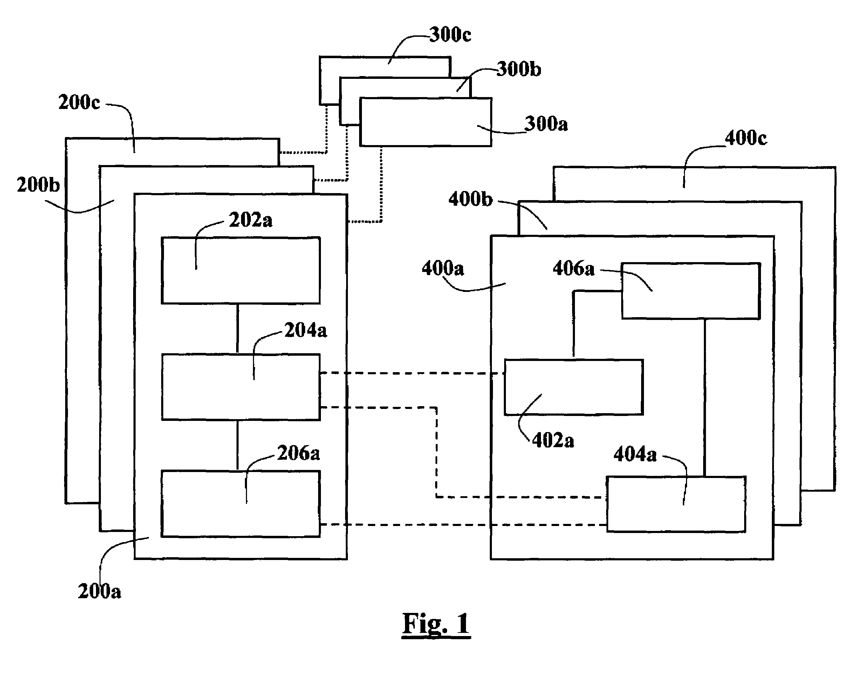

A Distributed MIB Coherency Supervisor (DMCS) block can be easily integrated in a Management architecture, as shown in Figure 1.

The architecture of Figure 1 comprises a Manager&ProxyManager 200a, adapted for the SNMP protocol scenario. The Manager&ProxyManager 200a, in turn, comprises a Request Manager 202a, an Access Method Manager 204a, and a Cache Manager 206a. The Manager&ProxyManager 200a operates and cooperates with an Agent 300a.

In a preferred embodiment, the Distributed MIB Coherency Supervisor 400a, adapted for the SNMP protocol scenario, comprises a Concurrence Manager 402a, a Reliability Manager 404a, and a Transaction Manager 406a. The Transaction Manager 406a interoperates with the Concurrence Manager 402a and the Reliability Manager 404a.

The architecture described can be easily extended to a multi-Agent/multi-Protocol scenario, as shown in Figure 1. In this case, the multi-protocol architecture described herein is able to manage multi-protocol transactions, where three or more different protocol scenarios (e.g. SMNP, Q3, and TL1) are managed together.

The same elements present in the Manager&ProxyManager 200a, adapted for the SNMP protocol scenario, are also present in a Manager&ProxyManager 200b, adapted for the Q3 protocol scenario, and in a Manager&ProxyManager 200c, adapted for the TL1 protocol scenario. Correspondingly, the Manager&ProxyManager 200b and the Manager&ProxyManager 200c operate, respectively, whit an Agent 300b and an Agent 300c.

The Distributed MIB Coherency Supervisor 400b, adapted for the Q3 protocol scenario, and the Distributed MIB Coherency Supervisor 400c, adapted for the TL1 protocol scenario, are similar to the Distributed MIB Coherency Supervisor 400a, adapted for the SNMP protocol scenario.

In details, in a SNMP scenario a User Service Manager (USM) Cache is supplied with a set of primitives defined in the Access Method Manager 204a (e.g. the Corba for the SNMP Gateway) which is mapped on the SNMP primitives set on the Request Manager 202a (SNMP-EMLIM).

In an embodiment, the Distributed MIB Coherency Supervisor 400a, adapted for the SNMP protocol scenario, comprises two components: the Reliability Manager 404a and the Concurrence Manager 402a.

In particular, the Reliability Manager 404a is responsible to ensure the Atomicity and the Durability properties to the SNMP/Q3 data sequence.

A Transaction Identifier, named T, provides, e.g., the following set of transactional commands on the Managed Objects:
- B(T): Begin transaction,
- C(T): Commit transaction, and
- A(T): Rollback (Abort) transaction.

The Reliability Manager 404a receives requests of accessing the Cache and produces requests act to guarantee the robustness and the failure recovery.

The Reliability Manager 404a comprises a structured LOG file written in XML (extensible Markup Language) format (XML_LOG). It is resident in a well defined directory of the User Service Manager (USM) application and can be parsed.

The XML_LOG file contains a complete set of redundant information which permits to re-build a consistent state of the Managed Objects after a failure. In particular, a set of transactional commands on the Managed Objects and a set of associated "inverse" operations are defined. Moreover, for each transactional command there exists an "inverse" operation which can include more than one single operation. When a failure occurs, the "inverse" operations are performed in order to re-establish a consistent state of the MIB. The use of the XML technology can be considered not mandatory. It is possible to implement the same restoration logic using a simple ASCII log file.

On the other hand, the Concurrence Manager 402a implements a scheduler that establishes the order of accessing the data in the Cache. Typical anomalies of the SNMP/Q3 concurrence transactions are:
- Inconsistent reading,
- Dirty reading,
- Ghost refresh, and
- Ghost insert.

The Concurrence Manager 402a interacts with the Access Method Manager 204a. It receives the requests for the data accessing, decides if the requests are authorized or not, and finally reorganizes the order of the requests.

The Reliability Manager is responsible to ensure the Atomicity and the Durability properties to the management protocol (e.g. SNMP, Q3) and the Managed Device information base data sequence, while the Concurrence Manager is responsible to ensure the Isolation property to the management protocol (e.g. SNMP, Q3) and the Managed Device information base data sequence.

The Consistency property is not in charge of the Distributed MIB Coherency Supervisor 400a because the assumption is a well defined scenario where the data model (MIB) is already defined and the Consistency controls are in charge of the Request Manager 202a and so there are no integrity violation related to the treated MIB objects.

The Reliability Manager 404a comprises a XML_LOG file that contains the actions realized by the SNMP/Q3 transactions, in temporal order. The XML_LOG file is composed of one or more block areas and each block area is composed of one or more record areas. The block area contains a contextual set of transactions and each record contains an SNMP/Q3 transaction.

The record can be of two types:
- Transaction record, which stores the activities related to each transaction in a temporal order. Each transaction stores in the block area a "start transaction" record, the records related to the SNMP/Q3 actions (Insert, Delete, Create) and finally the record of Commit or Abort,
- System record, which contains information used to execute "dump" and/or "checkpoint" operations. Each transaction stores in the XML_LOG file a record of "dump" and two or more records of checkpoint.

The description of a generic Transaction T, is depicted using the following Transaction record structures contained in the XML_LOG file:
- Begin, Commit and Rollback records that contain the indication about the type of record and the Transaction Identifier. Symbols used are B(T), A(T) and C(T);
- Update records which contain a Transaction Identifier, an Object Identifier of the updated object, the Before State (BS) and the After State (AS) values (which respectively contain the "Before" value of the Objects O and the "After" value of the Object O). Symbols used are U(T, O, BS, AS);
- Insert and Delete records which are similar to the Update record: the Insert record contains only the After State (AS) object and the Delete record contains only the Before State (BS) object. Symbols used are I (T,O,AS) and D(T,O,BS) .

The above described records represent the minimum set of primitives which permits to undo and redo each type of actions on Managed Objects such as to permit a correct recovery of the Managed Objects after a failure. This approach is considered applicable on SNMP and Q3 Info model as well.

The checkpoint operation is realized periodically by the Reliability Manager 404a with the goal to register the set of active transactions. Steps of the checkpoint operations are:
- to hang up the acceptance of writing operation, Commit or Abort from each transaction;
- to copy in the XML_LOG file the info related to the transactions which have already executed the Commit;
- to write in a synchronous mode (in the XML_LOG file) a record of checkpoint that contains the identification of the active transactions; and
- to restart the operation hanged up.

The Reliability Manager 404a comprises the following services:
- the DMCS Basic Primitives,
- the DMCS Logic, and
- the DMCS Warm Restart Service.

The DMCS Basic Primitives, used to obtain the consistent state of the MIB, are the following:
- Undo Primitives: the destruction of an action on a well defined object O can be obtained coping in the object O the Before State (BS) value. The Insert is destroyed cancelling the object O, and
- Redo Primitives: the "Re" construction of an action on an Object O can be obtained copying the After State (AS) value in the object O. The Delete is redone deleting the object O.

Implementation of Undo and Redo primitives in the SNMP context is obtained using the criteria depicted in tables 1 - 4.

In particular, Table 1 shows in the left column the list of transactional commands to Create a resource using the "Create and go" option, while in the right column there is the list of "inverse" operations used to undo the Create operation.

Table 2 shows in the left column the list of transactional commands to Create a resource using the "Create and wait" option, while in the right column there is the list of "inverse" operations used to undo the Create operation.

**Table 1**

| **Create a resource using "Create and go"** | |
|---|---|
| **DO** | **UNDO** |
| RECORD SEQUENCE | RECORD SEQUENCE |
| <INSERT T ResourceID AS = AfterValue></INSERT> | Status = destroy |
| <INSERT T StatusOID AS = Create&Go></INSERT> | |

**Table 2**

| **Create a resource using "Create and wait** | |
|---|---|
| **DO** | **UNDO** |
| RECORD SEQUENCE | RECORD SEQUENCE |
| <INSERT T StatusOlD AS = NotInService | Status = destroy |
| (=Create&Wait)></INSERT> | |
| <INSERT T ResourcelD AS = AfterValue ></INSERT> | |
| <UPDATE T StatusOID BS = NotlnService AS = | |
| Active></UPDATE> | |

Table 3 shows in the left column the list of transactional commands to Update a resource, while in the right column there is the list of "inverse" operations used to undo the Update operation.

**Table 3**

| **Update a resource** | |
|---|---|
| **DO** | **UNDO** |
| RECORD SEQUENCE | RECORD SEQUENCE |
| <UPDATE T StatusOlD BS = Active AS = | Status = Not In Service |
| NotInServics></UPDATE > | Insert Before Value |
| <UPDATE T ResourcelD BS = BeforeValue AS = | Status = Active |
| AfterValue>< /UPDATE > | |
| <UPDATE T StatusOlD BS = NotInService AS = | |
| Active></UPDATE > | |

Finally, Table 4 shows in the left column the list of transactional commands to Delete a resource, while in the right column there is the list of "inverse" operations used to undo the Delete operation.

**Table 4**

| **Delete a resource** | |
|---|---|
| **DO** | **UNDO** |
| RECORD SEQUENCE | RECORD SEQUENCE |
| <DELETE T ResourceID BS = Before Value> | If BS = Active |
| </DELETE> | Status = Create&Wait |
| <UPDATE T StatusOID BS = Active or NotInService | Insert Before Value |
| AS = destroy></UPDATE > | Status = Active |
| | If BS = NotInService |
| | Status = Create&Wait |
| | Insert Before Value |

Implementation of Undo and Redo primitives in the Q3 context is obtained using the criteria depicted in tables 5 - 7.

In particular, Table 5 shows in the left column the list of transactional commands to Create a resource using the "Create and go" option, while in the right column there is the list of "inverse" operations used to undo the Create operation.

**Table 5**

| **Create a resource using "Create and go" (Q3 M-CREATE)** | |
|---|---|
| **DO** | **UNDO** |
| RECORD SEQUENCE | RECORD SEQUENCE |
| <INSERT T OID=<stringified DN> <Attld=<Regid> AS | Status = destroy |
| = AfterValue>></INSERT> | |
| <INSERT T StatusOID AS = Create&Go></INSERT> | |

Table 6 shows in the left column the list of transactional commands to Update a resource, while in the right column there is the list of "inverse" operations used to undo the Update operation.

**Table 6**

| **Update a resource (Q3 M-SET)** | |
|---|---|
| **DO** | **UNDO** |
| RECORD SEQUENCE | RECORD SEQUENCE |
| <UPDATE T StatusOID BS = Active AS = | Status = Not In Service |
| NotInService></UPDATE > | Insert Before Value |
| <UPDATE T T OID=<stringified DN> <Attld=<Regid> | Status = Active |
| BS = BeforeValue AS = AfterValue>> < /UPDATE > | |
| <UPDATE T StatusOID BS = NotInService AS = | |
| Active></UPDATE > | |

Finally, Table 7 shows in the left column the list of transactional commands to Delete a resource, while in the right column there is the list of "inverse" operations used to undo the Delete operation.

**Table 7**

| **Delete a resource** | |
|---|---|
| **DO** | **UNDO\** |
| RECORD SEQUENCE | RECORD SEQUENCE |
| <DELETE T T OID=<stringified DN> BS = Before | If BS = Active |
| Value> </DELETE> | Status = Create&Wait |
| <UPDATE T StatusOID BS = Active or NotinService | Insert Before Value |
| AS = destroy></UPDATE > | Status = Active |
| | If BS = NotInService |
| | Status = Create&Wait |
| | Insert Before Value |

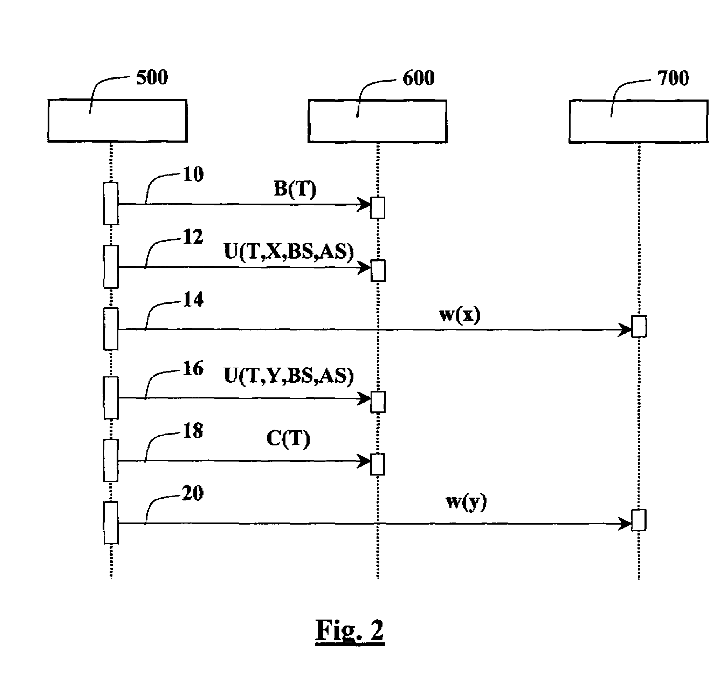

The DMCS Logic will be described in the following. The generic (synchronous) protocol used to implement the DMCS Logic is depicted in Figure 2.

During the transactional process the Reliability Manager 404a executes two basic rules, which define the minimal requirements that permit a correct recovery of Managed Objects after a failure:
- the DMCS_WAL rule forces the storing of the XML_LOG records before the storage of the data inside the MIB (AS and BS). This rule permits to destroy objects stored by an incomplete transaction (which have no invoked the Commit); and
- the DMCS_Commit-Before rule forces the storing of the XML_LOG records before the Commit operation. This rule permits to redo the writing already started by a transaction which has invoked the Commit, where the modifications are not already transferred from the Cache to the Agent.

The Transaction T writes initially the B(T) record and realizes two updates actions writing the XML_LOG record U(T,O,BS,AS) independently from the storage of the objects inside the MIB. It permits to refresh the Cache independently from the Reliability Manager 404a.

The arrangement described herein uses the Redo-Undo primitives in order to reach a consistent state of the MIB.

When a failure occurs, the Warm Restart Service is automatically called, in order to implement the depicted protocol which permits to reach the last consistent state of the Managed Objects.

The DMCS Warm Restart Service is organized in four steps:
1. the XML parser retrieves the last block stored inside the XML_LOG file and go back until the checkpoint record;
2. the DMCS Logic decides the transactions that have to be executed. Two transactions set are created:
   - the UNDO set, and
   - the REDO set,
      each of which contains the list of transactions identifiers. The UNDO set is initialized with the active transactions until the checkpoint. The REDO set is initialized with the null value. At this point the XML_LOG file is explored in the forward direction and the DMCS Logic adds to the UNDO set all the transactions which have a Begin record, while it move from the UNDO set to the REDO set all the transaction identifier where a Commit record is present. When this step is completed, the UNDO and the REDO set contain respectively the complete set of transaction identifier related to the transaction which can be Undone and the transactions which can be Done (again);
3. the XML_LOG file is explored in the backward direction in order to destroy the transactions of the UNDO set; and
4. finally, the XML_LOG file is explored in the forward direction where are applied the REDO actions, in the same temporal order specified in the LOG file.

The following example, in pseudo-code, depicts the Reliability Manager Logic. The XML_LOG file represents the data structure produced during the transaction T.

```
    <?xml version="1.0" standalone="yes"?>
    <BLOCK_1>
     1 <BEGIN TRS ID = "1">1</BEGIN>
     2 <BEGIN TRS ID = "2">2</BEGIN>
     3 <UPDATE TRS ID = "2" OID =
 "1.3.6.1.4.1.637.54.1.25.2.1.1.1.8" BVAL = "1" AVAL =
 "2"> 2 </UPDATE >
     4 <INSERT TRS ID = "1" OID =
 "1.3.6.1.4.1.637.59.1.25.2.1.1.1.7" AVAL = "1"> 1
 </INSERT >
     5 <BEGIN TRS ID = "3"> 3 </BEGIN>
     6 <COMMIT TRS ID = "1"> 1 </COMMIT>
     7 <BEGIN TRS ID = "4"> 4 </BEGIN>
     8 <UPDATE TRS ID = "3" OID =
 "1.3.6.1.4.1.637.54.1.25.2.1.1.1.7" BVAL = "1" AVAL =
 "2"> 2 </UPDATE >
     9 <UPDATE TRS ID = "4" OID =
 "1.3.6.1.4.1.637.54.1.25.2.1.1.1.6" BVAL = "TRUE" AVAL =
 "FALSE"> FALSE </UPDATE >
     10 <CHECKPOINT> TRS ID = "2" TRS ID = "3" TRS ID =
 "4"</CHECKPOINT>
     11 <COMMIT TRS ID = "4"> 4 </COMMIT>
     12 <BEGIN TRS ID = "5"> 5 </BEGIN>
     13 <UPDATE TRS ID = "3" OID =
 "1.3.5.1.4.1.637.54.1.25.2.1.1.1.6" BVAL = "FALSE" AVAL =
 "TRUE"> TRUE </UPDATE >
     14 <UPDATE TRS ID - "5" OID =
 "1.3.6.1.4.1.637.54.1.25.2.1.1.1.5" BVAL = "0" AVAL =
 "8100"> 8100 </UPDATE >
     15 <DELETE TRS ID = "3" OID =
 "1.3.6.1.4.1.637.54.1.25.2.1.1.1.3" BVAL = "1" > 1
 </DELETE >
     16 <ABORT TRS ID = "3"> 3 </ABORT >
    17 <COMMIT TRS ID = "5"> 5 </COMMIT>
    18 <INSERT TRS ID = "2" OID =
 "1.3.6.1.4.1.637.54.1.25.2.1.1.1.2" AVAL = "1"> 1
 </INSERT >
    </BLOCK_1>
```

The extensible Markup Language (XML) structure can be of two types: simple, as depicted in the above example, or structured usable in order to track complex nested transactions.

If a failure occurs, the DMCS Logic operates as follows.
1. The parser enters to the checkpoint record and the DMCS Logic builds the following set:
   a. UNDO = (T2, T3, T4)
   b. REDO = {}
2. Subsequently, the parser explores the XML file in the forward direction and it refreshes the REDO and UNDO set:
   a. When the parser reads the COMMIT record: T4: UNDO = {T2,T3}, REDO = {T4}
   b. When the parser reads the BEGIN record: T5: UNDO = {T2,T3,T5}, REDO = {T4}
   c. When the parser reads the COMMIT record: T5: UNDO = {T2,T3}, REDO = {T4,T5}
3. Subsequently the XML_LOG file is explored in the backward direction until the last action UPDATE (row 3) execute the following actions of UNDO:
   a. DELETE on 1.3.6.1.4.1.637.54.1.25.2.1.1.1.2 of AVAL
   b. RE-INSERT on 1.3.6.1.4.1.637.54.1.25.2.1.1.1.3 of BVAL
   c. SET on 1.3.6.1.4.1.637.54.1.25.2.1.1.1.6 = FALSE
   d. SET on 1.3.6.1.4.1.637.54.1.25.2.1.1.1.7 = 1
   e. SET on 1.3.6.1.4.1.637.54.1.25.2.1.1.1.8 = 1
4. Finally the actions of REDO
   a. SET on 1.3.6.1.4.1.637.54.1.2,9.2.1.1.1.6 = FALSE
   b. SET on 1.3.6.1.4.1.637.54.1.25.2.1.1.1.5 = 8100.

For the Q3 example there is a clear distinction between OID and AttId.

The Common Management Information Service Element (CMISE) operations management in the Distributed MIB Coherency Supervisor (DMCS) will now explained.
- the M-CREATE operation receives a sequence of couples <AttId, AVAL Value> as input;
- the M-DELETE operation receives a sequence of couples <AttId, BVAL Value> as input;
- the M-SET operation splits a multi-attribute operation into N single attribute UPDATE operations; and
- the M-ACTION operation stores the sequence of object creation and deletion, and uses attributes set to perform the Rollback operations.

All the Create operations managed by the Q3 management protocol are considered "Create and Go".

The following example, in pseudo-code, depicts the operations managed by the Q3 management protocol.

```
     <?xml version="1.0" standalone="yes"?>
     <BLOCK_1>
     1 <BEGIN TRS ID = "1"> 1 </BEGIN>
     2 <BEGIN TRS ID = "2"> 2 </BEGIN>
     3 <UPDATE TRS ID = "2" OID = "<stringified DN>"
 AttId=<attibuteRegId> BVAL = "1" AVAL = "2"> 2 </UPDATE>
     4 <INSERT TRS ID = "1" OID = "<stringified DN>"
 AttId=<attibuteRegId> AVAL = "1"> 1 </INSERT >
     5 <BEGIN TRS ID = "3"> 3 </BEGIN>
     6 <COMMIT TRS ID = "1">1</COMMIT>
     7 <BEGIN TRS ID = "4"> 4 </BEGIN>
     8 <UPDATE TRS ID = "3" OID = "<stringified DN>"
 AttId=<attibuteRegId>" BVAL = "1'' AVAL = "2"> 2 </UPDATE
 >
     9 <UPDATE TRS ID = "4" OID = "<stringified DN>"
 AttId=<attibuteRegId> BVAL = "TRUE" AVAL = "FALSE"> FALSE
 </UPDATE >
     10 <CHECKPOINT> TRS ID = "2" TRS ID = "3" TRS ID =
 "4"</CHECKPOINT>
     11 <COMMIT TRS ID = "4"> 4 </COMMIT>
     12 <BEGIN TRS ID = "5"> 5 </BEGIN>
     13 <UPDATE TRS ID = "3" OID = "<stringified DN>"
 AttId=<attibuteRegId> BVAL = "FALSE" AVAL = "TRUE"> TRUE
 </UPDATE >
     14 <UPDATE TRS ID = "5" OID = "<stringified DN>"
 AttId=<attibuteRegId> BVAL = "0" AVAL = "8100"> 8100
 </UPDATE >
     15 <DELETE TRS ID = "3" OID = "<stringified DN>"
 AttId=<attibuteRegId> BVAL = "1" > 1 </DELETE >
     16 <ABORT TRS ID = "3"> 3 </ABORT >
     17 <COMMIT TRS ID = "5"> 5 </COMMIT>
     18 <INSERT TRS ID = "2" OID = "<stringified DN>"
 AttId=<attibuteRegId> AVAL = "1"> 1 </INSERT >
     </BLOCK_1>
```

The Concurrence Manager 402a provides the following mechanisms:
- Locking: the read/write operations are protected by the execution of the r_lock primitive, w_lock primitive and unlock primitive. In details each read/write operation is preceded by the r_lock or w_lock primitive and is followed by the unlock primitive. In this case the Concurrence Manager 402a manages the lock table in order to store the set of lock already granted. This mechanism can be used when a MIB object which locks the resource is already defined;
- Time Stamp: each transaction identifier is associated to a temporal event, which defines the order of the execution of the transactions. This is a simple method where the "Concurrence" control is realized in the following way:

- each transaction is associated to a timestamp, which represents the event of the start transaction,
- the transactions are executed using a schedule criterion which reflects the serial order of the transactions based on its timestamp value.

At each object x, the DMCS Logic associates two indicators: WTM(x) and RTM(x) that corresponds to the timestamp of the transaction which have executed the last write and the timestamp of the transaction which have executed the last read of x (greatest value of timestamp ts). The DMCS Logic manages objects of the read(x,ts) type and the write (x,ts) type where ts indicates the timestamp of the transaction which execute the read or write operation. Moreover the Logic decides to execute or not the transaction, using the following policy:
- Read(x,ts): if ts < WTM(x) the transaction is killed, otherwise the request is accepted. In this latter case the RTM(x) is refreshed and become the max between RTM(x) and ts;
- Write (x, ts): if ts < WTM(x) or ts < RTM(x) the transaction is killed, otherwise the transaction is accepted. In this latter case WTM(x) is refreshed and become equal to ts.

Each transaction cannot read or write an attribute stored by a transaction with a time stamp greater than the actual time stamp. Moreover, each transaction cannot write an attribute which is already read by a transaction having a time stamp greater than the actual time stamp. The following example depicts the Concurrence Manager Logic:
- if RTM(x) = 7 and WTM(x) = 5 (or the object x is read the last time by the transaction with timestamp 7 and write the last time by the transaction with timestamp 5), the DMCS Logic responds with the following values:

| **Request** | **Response** | **New values** |
|---|---|---|
| | | |
| Read(x,6) | ok | - |
| Read(x,7) | ok | - |
| Read(x,9) | ok | RTM(x) = 9 |
| Write(x,8) | no | T8 killed |
| Write(x,11) | ok | WTM(x) = 11 |
| Read(x,10) | no | T10 killed |

The time stamp attribute can be stored inside the record depicted in the above section and the DMCS Logic parse it in a temporary order.

The Rollback procedure can be executed into two different scenarios:
- in a Distributed Context the Rollback procedure, for rebuilding the consistent state of the system, are stored in the Network Manager and are started by the Network Manager after a configuration operation; or
- in a Local Context the Rollback procedure, for rebuilding the consistent state of the system, are stored in the Network Elements and are called after a spontaneous restart operation of the Network Element; in this case the beginning of the Rollback procedure is independent from the configuration operations.

The method can be performed through a software program running on hardware of a network management station; the network management station can be a workstation or a personal computer. The software program can be written in a programming language like C, C++ or Java.

The method can be performed by a Network management system including:
- a Managed Device storing Managed Objects arranged in at least one Management Information Base;
- a network management station adapted to perform a management session on the Managed Objects through a network management protocol.

The network management station includes a Reliability Manager block configured to manage Transactions through a set of transactional commands on the Managed Objects, the Reliability Manager block including a file which contains in temporal order the list of actions realized by said Transactions;

The Reliability Manager block is further configured to associate to said transactional commands a complete set of "inverse" operations which permits to re-build a consistent state of the Managed Objects after a failure.

Flexibility, network overload reduction, easy integration and better performance are the key points of the Distributed MIB Coherency Supervisor arrangement described herein. The Network Management System, based on the DMCS mechanism, ensures the consistent state of the complete data set when an application is restoring after a failure.

The Distributed MIB Coherency Supervisor represents an example of methodology, based on a distributed service that permits to introduce new communication approaches which ensure the consistence of the Managed Objects, in each type of fault management scenario.

There are many reasons that justify the use of and interest in the Distributed MIB Coherency Supervisor.

The first is represented by the generic re-use of the Distributed MIB Coherency Supervisor that can be extended to each network application and each Network Management Protocol that works in critical environments, from a network performance point of view.

The second is represented by the easy integration of the service which can be invoked by each manager as stand alone service, without the necessity of integrate it in the network platform.

Finally, is represented by the easy usage and integration into the current Management protocols, ensuring the backward compatibility with the actual protocol releases.

Consequently, without prejudice to the underlying principles of the invention, the details and the embodiments may vary, also appreciably, with reference to what has been described by way of example only, without departing from the scope of the invention as defined by the annexed claims.

## Claims

1. A method of using a network management protocol in a remote Managed Device management session performed on Managed Objects arranged in at least one Management Information Base,
**characterized in that** said method includes the steps of:
- providing a Reliability Manager block (404a) configured to manage a Transaction (T) by providing a set of transactional commands (B(T), C(T)) on said Managed Objects;
- including in said Reliability Manager block (404a) a file which contains in temporal order, the list of actions realized by said Transaction; and
- associating to said transactional commands (B(T), C(T) a complete set of "inverse" operations, which permits to re-build a consistent state of said Managed Objects after a failure.

2. The method according to claim 1, **characterized in that** said file is written in extensible Markup Language format and referred to as XML_LOG file.

3. The method according to any of the previous claims, **characterized in that** it is carried out in a management scenario selected out of:
- a Simple Network Management Protocol, referred as SNMP, management scenario,
- a Q3 management scenario, and
- a TL1 management scenario.

4. The method according to claims 2 or 3,
**characterized in that** it includes the step of arranging said XML_LOG file in the form of at least one block area in turn composed of at least one record areas, wherein each block area contains a set of transactions and each record contains a transaction.

5. The method according to any of claims 2 to 4,
**characterized in that** it includes the step of including in said XML_LOG file two record types:
- Transaction record, which stores the activities related to each transaction in a temporal order; each transaction stores in the block area a start transaction record, the records related to the actions and finally the record of Commit (C(T)) or Abort (A(T)),
- Method record, which contains information used to execute dump and/or checkpoint operations; each transaction stores in the XML_LOG file a record of "dump" and two or more records of checkpoint.

6. The method according to any of the previous claims, **characterized in that** it includes the step of implementing a scheduler role that establishes the order of the access to the data in a Cache (206a), for avoiding concurrence transactions anomalies like:
- Inconsistent reading,
- Dirty reading,
- Ghost refresh, and
- Ghost insert.

7. The method according to any of claims 4 to 6,
**characterized in that** it includes the step of configuring said set of transactional commands contained in said XML_LOG file to undo and redo each type of actions on said Managed Objects and to comprise:
- Begin, Commit and Rollback records that contain the indication about the type of record and the Transaction Identifier;
- Update records which contain a Transaction Identifier, an Object Identifier of the updated object, the Before State BS and the After State AS values;
- Insert and Delete records which are similar to the Update record: the Insert record contains only the After State AS object and the Delete record contains only the Before State BS object.

8. The method according to claim 7, **characterized in that** it includes the step of said Reliability Manager block (404a) periodically realizing checkpoint operations, for registering the set of active transaction, wherein said checkpoint operations:
- hang up the acceptance of writing operation, Commit or abort from each transaction;
- copy in said XML_LOG file, the info related to the transactions which have already executed the Commit;
- write in a synchronous mode in said XML LOG file a record of checkpoint that contains the identification of the active transactions; and
- restart the operation hanged up.

9. The method according to any of the previous claims, **characterized in that** it includes the step of including in said Reliability Manager block (404a) services selected out of:
- Basic Primitives for obtaining the consistent state ofsaid Managed Objects,
- Logic for deciding the transactions to be executed, and
- Warm Restart Service for implementing said management protocol which permits to reach the last consistent state ofsaid Managed Objects.

10. The method according to claim 9, **characterized in that** it includes the step of including in said Basic Primitives, used to obtain a consistent state of said Managed Objects:
- Undo Primitives wherein the destruction of an action on a well defined object O can be obtained coping in the object O the Before State BS value; the insert is destroyed cancelling the object O; and
- Re-Do Primitives wherein the "Re" construction of an action on an Object O can be obtained copying the After State AS value in the object O; the delete is redone deleting the object O.

11. The method according to any of claims 6 to 10,
**characterized in that** it includes the step of said Reliability Manager block (404a) executing two basic rules which define the minimal requirements that permit a correct recovery of saidsaid Managed Objects after said failure:
- a DMCS_WAL rule to force storing of the XML_LOG records before the storage of the data inside the MIB After State and Before State to destroy objects stored by an incomplete transaction which have not invoked the Commit; and
- a DMCS_Commit-Before rule to force storing of the XML_LOG records before the Commit operation to redo the writing already started by a transaction which has invoked the Commit, where the modifications are not already transferred from the Cache to said Managed Objects.

12. The method according to any of claims 9 to 11,
**characterized in that** it includes the step of automatically calling said Warm Restart Service when said failure occurs, in order to reach the last consistent state ofsaid Managed Objects.

13. The method according to any of claims 9 to 12,
**characterized in that** it includes the step of configuring said Warm Restart Service for:
- retrieving the last block stored inside the XML_LOG file and go back until the checkpoint record;
- deciding the transactions that have to be executed; creating the UNDO set, and the REDO set,
- exploring the XML_LOG file in the forward direction adding to the UNDO set all the transactions which have a Begin record, moving from the UNDO set to the REDO set all the Transaction Identifier where a Commit record is present,
- exploring the XML_LOG file in the backward direction in order to destroy the transactions of the UNDO set; and
- exploring the XML_LOG file in the forward direction where are applied the REDO actions, in the same temporal order specified in the XML_LOG file.

14. The method according to any of the previous claims, **characterized in that** it includes the step of providing:
- a Locking mechanism wherein the read/write operations are protected by the execution of the r_lock primitive, w_lock primitive and unlock primitive, so each read/write operation is preceded by the r_lock or w_lock primitive and is followed by the unlock primitive, and
- a Time Stamp mechanism wherein each Transaction Identifier is associated to a temporal event, which defines the order of the execution of the transactions:
- each transaction is associated to a timestamp, which represents the event of the start transaction, and
- the transactions are executed using a schedule criterion which reflects the serial order of the transactions based on its timestamp value.

15. The method according to any of claims 9 to 14,
**characterized in that** it includes the step of said Logic associating two indicators WTM(x) and RTM(x) to each object x that correspond to the timestamp of the transaction which have executed the last write and to the timestamp of the transaction which have executed the last read of the object x.

16. A computer program product, loadable in the memory of at least one computer and including software code portions for performing the method of any of claims 1 to 15.

17. Network management system including:
- a Managed Device (300a, 300b, 300c) storing Managed Objects arranged in at least one Management Information Base;
- a network management station adapted to perform a management session on said Managed Objects through a network management protocol;
**characterized in that**:
- said network management station includes a Reliability Manager block (404a) configured to manage Transactions (T) through a set of transactional commands (B(T), C(T)) on said Managed Objects, said Reliability Manager block including a file which contains in temporal order the list of actions realized by said Transactions; and **in that**:
said Reliability Manager block is further configured to associate to said transactional commands a complete set of "inverse" operations which permits to re-build a consistent state of said Managed Objects after a failure.
